# EUROPEAN PATENT APPLICATION

(11) **EP 4 693 713 A1**
(43) Date of publication of application: **11.02.2026**
(21) Application number: 24815766.1
(22) Date of filing: 21.05.2024
(51) Int. Cl.: H01M 50/586, H01M 4/13, H01M 4/62, H01M 50/46, H01M 10/0585, H01M 10/052, H01M 4/02

(54) **ELECTRODE ASSEMBLY INCLUDING ADHESIVE INSULATING COATING PARTS AND ELECTROCHEMICAL DEVICE INCLUDING SAME**

(30) Priority: 26.05.2023 KR 20230068575
(71) Applicant: LG Energy Solution, Ltd., Seoul 07335 (KR)
(72) Inventor: LEE, Seung-Hyun, Daejeon 34122 (KR); SUNG, Dong-Wook, Daejeon 34122 (KR); KA, Kyung-Ryun, Daejeon 34122 (KR); KIM, Min-Ji, Daejeon 34122 (KR); HWANG, Seon-Woo, Daejeon 34122 (KR)
(74) Representative: Hoffmann Eitle
(86) International application number: PCT/KR2024/006854
(87) International publication number: WO 2024/248389

(57) **Abstract**

The present disclosure relates to an electrode assembly with improved adhesion strength between a positive electrode and a separator by giving an adhesive property to an insulating coating portion and an insulating coating composition therefor. The electrode assembly according to an aspect of the present disclosure has high wet adhesion strength between the electrode and the separator and prevents folding of the separator, thereby improving safety of an electrochemical device.F

## Description

### TECHNICAL FIELD

The present disclosure relates to an electrode assembly including an adhesive insulating coating portion and an electrochemical device including the same.

The present application claims priority to Korean Patent Application No. 2023-0068575 filed on May 26, 2023 in the Republic of Korea, the disclosure of which is incorporated herein by reference.

### BACKGROUND

With the technology development and growing demand for mobile devices, there is a rapid increase in demand for secondary batteries as an energy source. Recently, secondary batteries are used as a power source of electric vehicles (EV) and hybrid electric vehicles (HEV). Accordingly, many studies are being done on secondary batteries that meet diverse needs.

In particular, there is a high demand for lithium secondary batteries having high energy density, high discharge voltage and output stability, and lithium secondary batteries used as a power source of electric vehicles and hybrid electric vehicles require high output characteristics to achieve high output in a short time. There is a continued attention to safety improvement in lithium secondary batteries.

Meanwhile, an electrode assembly of the secondary battery may be classified into a jelly-roll (winding)-type electrode assembly, a stack-type electrode assembly and a stack/folding-type electrode assembly according to the structure, and basically the electrode assembly includes three fundamental components, a positive electrode, a separator and a negative electrode.

The typical electrode assembly has a structure in which a positive electrode and a negative electrode, each electrode having an electrode tab on one side are stacked with a separator interposed between the positive electrode and the negative electrode. However, in this structure, when the temperature rises due to the exposure to an external heat source or an internal short circuit, causing shrinkage of the separator, a short circuit may occur due to the contact of a part of the positive electrode and the negative electrode.

To solve the aforementioned problem, there are many studies using an insulating material, for example, inserting an insulating layer into a part of the electrode assembly. As an example, studies are being conducted on the positive electrode having an insulating layer using PVDF-based resin to prevent short circuits, lithium plating and fires.

However, there are reports that PVDF-based insulating materials under research and development are separated due to poor adhesion, or dissolved by the electrolyte solution when the electrolyte solution is injected into the electrode assembly, and there are still reports that adhesion strength between each component of the electrode assembly reduces, and the separator is not adhered to the electrode and is folded, causing short circuits due to the contact of a part of the positive electrode and the negative electrode.

### SUMMARY

### Technical Problem

The present disclosure is designed to solve the above-described problem, and therefore the present disclosure is directed to providing an electrode assembly for effectively preventing short circuits between a positive electrode and a negative electrode and an electrochemical device including the same.

In particular, the present disclosure is directed to providing an electrode assembly including an insulating coating portion to achieve high adhesion strength between an electrode and a separator.

As an example, the present disclosure is directed to providing an electrode assembly including an insulating coating portion to achieve high adhesion strength between a positive electrode and a separator.

### Technical Solution

To solve the above-described problem, according to an aspect of the present disclosure, there is provided an electrode assembly of the following embodiments.

The electrode assembly according to a first embodiment includes a positive electrode, a negative electrode and a separator between the positive electrode and the negative electrode, wherein at least one of the positive electrode or the negative electrode includes a current collector; an active material layer on at least one surface of the current collector; and an insulating coating portion on an entire outer periphery of one surface of the active material layer, and wherein a wet adhesion strength between the positive electrode or the negative electrode having the insulating coating portion and the separator is from 1 gf/20 mm to 20 gf/20 mm.

According to a second embodiment, in the first embodiment, at least one of the positive electrode or the negative electrode may include the active material layer on each of two surfaces of the current collector; and the insulating coating portion on the entire outer periphery of one surface of each of the active material layers.

According to a third embodiment, in the first or second embodiment, the insulating coating portion may include inorganic particles and a binder, and the binder may include two types of adhesive binders having a difference in glass transition temperature (Tg) of 100°C or less.

According to a fourth embodiment, in any one of the first to third embodiments, the insulating coating portion may include inorganic particles and a binder, and the binder may include a first adhesive binder having a glass transition temperature (Tg) of 50°C or more, and a second adhesive binder having a glass transition temperature (Tg) of 20°C or less.

According to another aspect of the present disclosure, there is provided an insulating coating composition of the following embodiments.

The insulating coating composition according to a fifth embodiment may include inorganic particles and a binder, and the binder may include two types of adhesive binders having a difference in glass transition temperature (Tg) of 100°C or less.

The insulating coating composition according to a sixth embodiment may include inorganic particles and a binder, and the binder may include a first adhesive binder having a glass transition temperature (Tg) of 50°C or more, and a second adhesive binder having a glass transition temperature (Tg) of 20°C or less.

According to a seventh embodiment, in the sixth embodiment, the first adhesive binder may include an aqueous particle binder.

According to an eighth embodiment, in the sixth or seventh embodiment, the first adhesive binder may include the aqueous particle binder having a particle size of 250 nm or more.

According to a ninth embodiment, in any one of the sixth to eighth embodiments, the second adhesive binder may include an aqueous particle binder, a solution binder or a mixture thereof.

According to a tenth embodiment, in any one of the sixth to ninth embodiments, the second adhesive binder may include the aqueous particle binder having a particle size of 250 nm or less.

According to an eleventh embodiment, in any one of the sixth to tenth embodiments, a weight ratio between the first adhesive binder and the second adhesive binder may be from 1:9 to 9:1.

According to a twelfth embodiment, in any one of the fifth to eleventh embodiments, a weight ratio between the inorganic particles and the binder may be from 7:3 to 9:1.

According to another aspect of the present disclosure, there is provided an electrochemical device of the following embodiments.

The electrochemical device according to a thirteenth embodiment may include the electrode assembly according to any one of the first to fourth embodiments; and a case accommodating the electrode assembly.

According to another aspect of the present disclosure, there is provided a method for manufacturing an electrode assembly of the following embodiments.

The method for manufacturing the electrode assembly according to a fourteenth embodiment includes preparing an electrode including a current collector, and an active material layer on at least one surface of the current collector, forming an insulating coating portion including inorganic particles and a binder on an entire outer periphery of one surface of the active material layer, and bringing a separator into contact with the surface having the insulating coating portion and rolling, wherein the electrode may be at least one of a positive electrode and a negative electrode, and wherein a wet adhesion strength between the electrode having the insulating coating portion and the separator may be from 1 gf/20 mm to 20 gf/20 mm.

### Advantageous Effects

The electrode assembly according to an embodiment of the present disclosure has the insulating coating portion having an adhesive property on the outer periphery of the electrode to increase the adhesion strength between the electrode and the separator and suppress short circuits between the electrodes.

Accordingly, it may be possible to reduce the risks of explosions and fires caused by short circuits, thereby improving safety.

### BRIEF DESCRIPTION OF THE DRAWINGS

FIG. 1 shows an electrode active material layer 11 on a current collector having a tab portion 1 and an insulating coating portion 20 on the entire outer periphery of one surface of the electrode active material layer according to an embodiment of the present disclosure.
FIG. 2 is a side view of an assembly including an electrode active material layer 11, an insulating coating portion 20 and a separator 30 stacked on a current collector 10 having a tab portion 1 in a sequential order according to an embodiment of the present disclosure.
FIG. 3 is a vertical cross-sectional view of a central area of an assembly including an electrode active material layer 11, an insulating coating portion 20 and a separator 30 stacked on a current collector 10 having a tab portion 1 in a sequential order according to an embodiment of the present disclosure.

### DETAILED DESCRIPTION

Hereinafter, the present disclosure will be described in detail.

The term "include" or "comprise" when used in this specification, specifies the presence of stated elements, but does not preclude the presence or addition of one or more other elements, unless the context clearly indicates otherwise.

Throughout the specification, "A and/or B" refers to either A or B or both.

The present disclosure relates to an electrode assembly and an electrochemical device including the same. Examples of the electrochemical device may include a primary battery, a secondary battery, a super capacitor and an electric double layer capacitor. More specifically, the secondary battery may be a lithium ion secondary battery.

The electrode assembly and the electrochemical device of the present disclosure will be described in more detail with reference to the accompanying drawings.

The electrode assembly according to an aspect of the present disclosure includes a positive electrode, a negative electrode and a separator between the positive electrode and the negative electrode. In this instance, at least one of the positive electrode or the negative electrode includes a current collector; an active material layer on at least one surface of the current collector; and an insulating coating portion on the entire outer periphery of one surface of the active material layer, and a wet adhesion strength between the positive electrode or the negative electrode having the insulating coating portion and the separator is from 1 gf/20 mm to 20 gf/20 mm.

In an embodiment of the present disclosure, the positive electrode may include the active material layer on at least one surface, and the insulating coating portion on the entire outer periphery of one surface of the active material layer, and the wet adhesion strength between one surface of the positive electrode having the insulating coating portion and the separator may be from 1 gf/20 mm to 20 gf/20 mm.

In another embodiment of the present disclosure, the negative electrode may include the active material layer on at least one surface, and the insulating coating portion on the entire outer periphery of one surface of the active material layer, and the wet adhesion strength between one surface of the negative electrode having the insulating coating portion and the separator may be from 1 gf/20 mm to 20 gf/20 mm.

In still another embodiment of the present disclosure, each of the positive electrode and the negative electrode may include the active material layer on at least one surface, and the insulating coating portion on the entire outer periphery of one surface of the active material layer, and the wet adhesion strength between one surface of the positive electrode having the insulating coating portion and the separator and/or the wet adhesion strength between one surface of the negative electrode having the insulating coating portion and the separator may be from 1 gf/20 mm to 20 gf/20 mm.

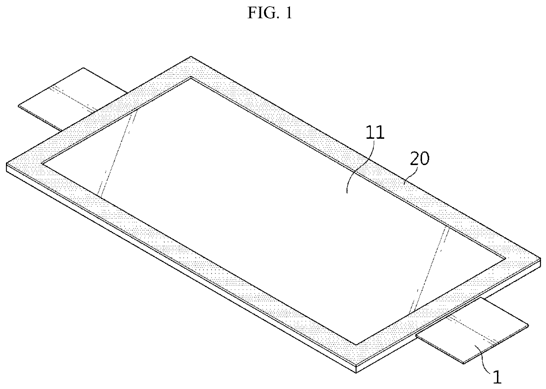

FIG. 1 is a diagram showing an example of the electrode. Specifically, FIG. 1 shows an electrode active material layer 11 on a current collector having a tab portion 1 and an insulating coating portion 20 on the entire outer periphery of one surface of the electrode active material layer according to an embodiment of the present disclosure.

Referring to FIG. 1, in an embodiment of the present disclosure, the electrode may have a structure including the current collector, the active material layer 11 on at least one surface of the current collector, and the electrode tab 1 extended from the current collector. In this instance, the insulating coating portion 20 is formed along the entire outer periphery on one surface of the active material layer 11.

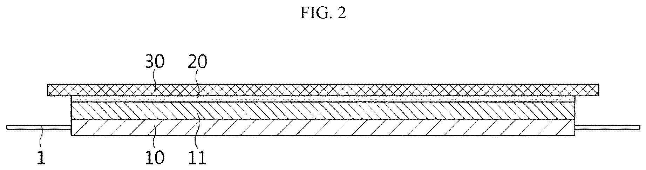

FIG. 2 is a diagram showing the electrode and the separator attached. Specifically, in FIG. 2, the electrode active material layer 11 formed on the current collector 10 having the tab portion 1 according to an embodiment of the present disclosure includes the insulating coating portion 20 on the outer periphery, and the insulating coating portion 20 may be located between the electrode active material layer 11 and the separator 30. Accordingly, it may be possible to improve the adhesion strength between the electrode active material layer and the separator, and reduce or prevent the folding of the separator when manufacturing the electrode assembly.

In an embodiment of the present disclosure, the electrode may have the active material layer on each of two surfaces of the current collector, and may include the insulating coating portion on the entire outer periphery on one surface of each of the active material layers. In this instance, the electrode may be a positive electrode and/or a negative electrode, and the present disclosure is not limited thereto.

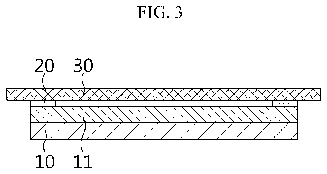

FIG. 3 is a schematic diagram of the electrode and the separator attached. Specifically, FIG. 3 is a vertical cross-sectional view of a central area of the assembly including the electrode and the separator attached. Referring to FIG. 3, the insulating coating portion 20 is formed on the outer periphery of the electrode active material layer 11, and the insulating coating portion is not present on the inner area of the electrode active material layer 11. In this instance, to prevent non-adhesion between the electrode active material layer and the separator due to the thickness of the insulating coating portion itself, the insulating coating portion is preferably thin enough to bring one surface of the electrode active material layer into contact with the separator when the pressure is applied to the electrode-the separator in the manufacture of the electrode assembly.

In an embodiment of the present disclosure, the insulating coating portion may be formed along the entire outer periphery on one surface of the electrode active material layer, and for example, may be formed with a thickness of from 0.5 to 1 *µ*m. Conventionally, the electrode active material layer may, for example, have a thickness deviation of about 3 *µ*m or more due to sliding of an electrode slurry in the manufacture of the electrode assembly. However, because the insulating coating portion having a small thickness is formed on the outer periphery of the electrode active material layer according to the present disclosure, it may be possible to reduce the thickness deviation of the electrode, improve the adhesion strength between the electrode and the separator, and prevent the folding of the separator, thereby improving safety of the battery, but the mechanism of the present disclosure is not limited thereto.

In an embodiment of the present disclosure, the insulating coating portion formed on the entire outer periphery of one surface of the electrode active material layer may, for example, have an area of from 5 area% to 50 area%, from 10 area% to 30 area% or from 15 area% to 20 area% on the basis of the total area of one surface of the electrode active material layer. When the insulating coating portion has the aforementioned range of areas on the basis of the area of one surface of the electrode active material layer, it may be possible to maintain the effect of the insulating coating portion and have a beneficial effect on energy density of the electrode, but the present disclosure is not limited thereto.

In an embodiment of the present disclosure, when a direction in which the current collector, the electrode active material layer and the insulating coating portion are stacked is a top-bottom direction, the area of the insulating coating portion may be measured by acquiring a top view image of the electrode having the insulating coating portion, and measuring the area occupied by the insulating coating portion based on the total area of the active material layer. In this instance, the top view image of the electrode is not limited to a particular type and may include a photographic image and a microscopic image, for example, a scanning electron microscopy (SEM) image.

The electrode assembly may exhibit the wet adhesion strength of from 1 gf/20 mm to 20 gf/20 mm at the interface between the electrode having the insulating coating portion and the separator, thereby preventing the folding of the separator not attached to the electrode in the electrode assembly, and avoiding short circuits between the electrodes.

In the specification, the wet adhesion strength refers to adhesion strength measured in the presence of an electrolyte solution to mimic an environment in which the electrode assembly operates as the battery. Even though the dry adhesion strength between the positive electrode or the negative electrode and the separator is high, when each component of the electrode assembly gets wet with the electrolyte solution by the contact between the electrode assembly and the electrolyte solution, the frictional force between each component may reduce or the adhesive substance may dissolve, resulting in insufficient wet adhesion strength. To solve the above-described problem, according to an aspect of the present disclosure, there is provided the electrode assembly in which the wet adhesion strength between one surface of the electrode having the insulating coating portion and the separator is in a range between 1 gf/20 mm and 20 gf/20 mm.

In an embodiment of the present disclosure, the wet adhesion strength between the electrode and the separator may be, for example, from 5 gf/20mm to 15 gf/20mm or from 8 gf/mm to 12 gf/mm. For example, the wet adhesion strength between the electrode and the separator may be 10 gf/mm, but the present disclosure is not limited thereto. When the wet adhesion strength between the electrode and the separator lies in the aforementioned range, it may be beneficial in maintaining the adhesion strength of the separator after the electrolyte solution is injected into the electrode assembly.

In the specification, the wet adhesion strength may be, for example, measured by the following method, but is not limited thereto. First, each of the electrode having the insulating coating portion on the entire outer periphery of one surface of the active material layer and the separator was tailored into a size of 25 mm x 60 mm to obtain a sample, and the pressure of 6.5 MPa was applied using a heat press at 60°C for 1 second to make an electrode-separator sample. Subsequently, the electrode-separator sample was placed in a pouch, 1g of the electrolyte solution was injected into the pouch, and the electrode-separator sample was soaked for 1 day, removed from the pouch and mounted on UTM machine (LLOYD Instrument LF Plus), then 90° peel strength was measured at the speed of 300 mm/min.

In an embodiment of the present disclosure, the electrode assembly may have not only high wet adhesion strength but also high dry adhesion strength between the electrode and the separator.

In an embodiment of the present disclosure, the dry adhesion strength between the electrode and the separator may be, for example, from 5 gf/25 mm to 30 gf/25 mm, from 10 gf/25 mm to 28 gf/25mm, from 15 gf/25 mm to 25 gf/25mm, or from 18 gf/25 mm to 23 gf/25 mm. For example, the dry adhesion strength between the electrode and the separator may be 20 gf/25 mm.

In the specification, the dry adhesion strength may be, for example, measured by the following method, but is not limited thereto. Each of the electrode having the insulating coating portion on the entire outer periphery of the active material layer and the separator was tailored into a size of 25 mm x 60 mm to obtain a sample, and the pressure of 6.5 MPa was applied using a heat press at 60°C for 1 second to make an electrode-separator sample. Subsequently, the electrode-separator sample was mounted on UTM machine (LLOYD Instrument LF Plus) and 180° peel strength was measured at the speed of 300 mm/min.

In an embodiment of the present disclosure, the electrode assembly may also have high peel strength between the active material layer and the insulating coating portion.

In the specification, the peel strength refers to an adhesion strength between the insulating coating portion formed on the entire outer periphery of the active material layer and the active material layer.

In an embodiment of the present disclosure, the peel strength between the active material layer and the insulating coating portion may be, for example, from 5 gf/15mm to 30 gf/15mm, from 10 gf/15mm to 30 gf/15mm, from 15 gf/15mm to 25 gf/15mm or from 20 gf/15mm to 25 gf/15mm. For example, the peel strength between the active material layer and the insulating coating portion may be 20 gf/15mm.

In the specification, the peel strength may be, for example, measured by the following method, but is not limited thereto. The positive electrode to be measured is tailored into a size of 15mm X 100mm. A double-sided adhesive tape is attached to a glass plate, and the surface of the insulating coating portion and the active material layer of the prepared electrode is adhered to the adhesive tape. Subsequently, the end of the adhered insulating coating portion was mounted on UTM machine (LLOYD Instrument LF Plus), and a force was applied 180° at the measurement speed of 300 mm/min to measure a force required for peeling the insulating coating portion from the active material layer.

According to an embodiment of the present disclosure, the insulating coating portion includes inorganic particles and a binder. In this instance, to exhibit the aforementioned adhesion strength, the binder includes an adhesive binder.

In an embodiment of the present disclosure, the binder included in the insulating coating portion may include two types of binders having different glass transition temperatures Tg as the adhesive binder.

Hereinafter, an insulating coating composition according to another aspect of the present disclosure will be described in detail.

According to another aspect of the present disclosure, the insulating coating composition is provided.

The insulating coating composition may be used to form the insulating coating portion of the electrode in the electrode assembly.

The insulating coating composition includes the inorganic particles and the binder, and the binder includes a first adhesive binder having the glass transition temperature Tg of 50°C or more, and a second adhesive binder having the glass transition temperature Tg of 20°C or less.

According to an aspect of the present disclosure, because the insulating coating composition includes the adhesive binder, this has a beneficial effect on improving the adhesion strength between the positive electrode and the separator. In this instance, because the binder includes two types of adhesive binders having different glass transition temperature ranges, this may have a beneficial effect on not only wet adhesion strength and dry adhesion strength but also adhesion strength (peel strength) between the active material layer and the insulating coating portion.

Specifically, the two types of adhesive binders included in the insulating coating composition may be referred to as the first adhesive binder and the second adhesive binder in a sequential order. The first adhesive binder and the second adhesive binder may hold together the inorganic particles in the insulating coating portion, thereby stably maintaining the insulation performance of the insulating coating portion.

In an embodiment of the present disclosure, the first adhesive binder is not limited the above-described function, but may additionally perform the function of improving the adhesion strength between the insulating coating portion and the separator, specifically the adhesion strength between the positive electrode and the separator. Additionally, the second adhesive binder is not limited the above-described function, but may additionally perform the function of improving the adhesion strength between the insulating coating portion and the active material and/or the current collector. To improve the adhesion strength between the positive electrode and the separator and the adhesion strength between the active material layer and the insulating coating portion, the binder may include two types of binders having different glass transition temperatures, but the effect of the present disclosure is not limited thereto.

In the specification, the glass transition temperature Tg indicates a range of temperatures in which the glass transition of the binder takes place. The glass transition temperature may be measured by the known method for measuring the glass transition temperature, for example, differential scanning calorimeter (DSC), specific heat measurements, dilatometer, thermomechanical analysis (DMA), thermal expansion measurement (TAM), micro-heat-transfer measurement, isothermal compressibility, heat capacity measurement.

In the specification, the glass transition temperature value may be a measured value obtained by measuring the flow of heat in the binder sample using DSC during the linear rise in temperature, and it is obvious to those skilled in the art that the numerical value of the glass transition temperature is, for example, a value including a predetermined measurement error range between -5% and +5% on the basis of the aforementioned value.

In an embodiment of the present disclosure, the binder may include two types of adhesive binders having a difference in glass transition temperature Tg of 100°C or less. Specifically, the binder may include two types of adhesive binders having the difference in glass transition temperature of 90°C or less. More specifically, the binder may include, for example, two types of adhesive binders having the difference in glass transition temperature of from 50°C to 90°C, from 60°C to 80°C, from 65°C to 75°C or from 65°C to 70°C.

In an embodiment of the present disclosure, the glass transition temperature of the first adhesive binder may be, for example, from 50°C to 80°C or from 50°C to 70°C.

In an embodiment of the present disclosure, the glass transition temperature of the second adhesive binder may be, for example, from -50°C to 20°C, from -40°C to 0°C or from -30°C to -10°C.

In an embodiment of the present disclosure, the first adhesive binder may have the glass transition temperature of 50°C or more, and may be an aqueous particle binder.

In the specification, the 'aqueous particle binder' refers collectively to any binder that exhibits a particle shape when dispersed in an aqueous solvent such as water (H₂O). The particle binder is not limited to a particular type and may include any type of binder that satisfies the above-described characteristics. For example, the particle binder may include an acrylic polymer, a rubber-based polymer, a cellulose-based polymer or a mixture thereof. The acrylic polymer may include, for example, polyalkyl(meth)acrylate, and the 'alkyl' may include, but not limited to, C1 to C5 alkyl. The rubber-based polymer may be a rubber-based polymer including at least one butadiene unit, and may include, for example, polybutadiene rubber, styrene-butadiene rubber and nitrile butadiene rubber, but is not limited thereto. The cellulose-based polymer refers collectively to cellulose and its derivatives, and may include, for example, cellulose, carboxymethylcellulose, hydroxyethylcellulose, hydroxypropylcellulose, hydroxypropylmethylcellulose phthalate, but is not limited thereto.

In an embodiment of the present disclosure, the first adhesive binder may include the aqueous particle binder, and specifically may consist of the aqueous particle binder. In this instance, the aqueous particle binder of the first adhesive binder may include a aqueous particle binder having a larger particle size than the inorganic particles included in the insulating coating composition as described below.

Specifically, the first adhesive binder may include the aqueous particle binder, and preferably, may be larger in size than the inorganic particles of the insulating coating composition so that it is not soaked between the inorganic particles in the insulating coating portion and is present on the surface of the insulating coating portion to exhibit high adhesion strength with the separator.

In an embodiment of the present disclosure, the first adhesive binder may include the aqueous particle binder having the particle size of 250 nm or more. The first adhesive binder may include, for example, the aqueous particle binder having the particle size of from 250 nm to 1 *µ*m or from 250 nm to 500 nm, but is not limited thereto.

In the specification, the particle size of the particle binder may indicate a measured value through particle size distribution (PSD) analysis, and for example, may indicate a measured value using Malvern Mastersizer 2000.

In an embodiment of the present disclosure, the second adhesive binder may improve the bond strength between the inorganic particles in the insulating coating portion, and improve the adhesion strength between the active material layer and/or the positive electrode current collector and the insulating coating portion when soaked between the inorganic particles.

To this end, in an embodiment of the present disclosure, the second adhesive binder may include a aqueous particle binder, a solution binder or a mixture thereof. Alternatively, the second adhesive binder may consist of each of the aqueous particle binder or the solution binder alone.

In an embodiment of the present disclosure, when the second adhesive binder includes the aqueous particle binder, the aqueous particle binder may preferably include the aqueous particle binder that is equal to or smaller than the inorganic particles in size so that it is soaked between the inorganic particles in the insulating coating portion.

In an embodiment of the present disclosure, the second adhesive binder may include the aqueous particle binder having the particle size of 250 nm or less. The second adhesive binder may include, for example, the aqueous particle binder having the particle size of from 50 nm to 250 nm or from 100 nm to 200 nm, but is not limited thereto.

In an embodiment of the present disclosure, the second adhesive binder may include the solution binder.

In the specification, the 'solution binder' refers collectively to binders that can dissolve in polar solvents including water (H₂O), and may be also referred to as a 'dissolvable binder'. The solution binder is not limited to a particular type but may include any type of solution binder that satisfies the above-described characteristics. The solution binder may include, for example, PVDF-based polymer, polyvinylalcohol (PVA), polyvinylpyrrolidone (PVP), polyacrylamide (PAM) or a mixture thereof. The PVDF-based polymer refers collectively to polymer including vinylidene fluoride as a monomer, for example, polyvinylidene fluoride (PVDF), polyvinylidene-co-hexafluoropropylene.

In an embodiment of the present disclosure, a weight ratio between the first adhesive binder and the second adhesive binder may be, for example, from 1:9 to 9:1 to exhibit the above-described adhesion strength, but is not limited thereto. Specifically, the weight ratio between the first adhesive binder and the second adhesive binder may be from 5:5 to 8:2.

In an embodiment of the present disclosure, the inorganic particles may include any type of inorganic particles used in the insulating coating portion of the electrode without limitation. The inorganic particles may include, for example, alumina (Al₂O₃), boehmite (AlOOH), silica (SiO₂), titanium dioxide (TiO₂), aluminum hydroxide (Al(OH)₃), magnesium oxide (MgO), magnesium hydroxide (Mg(OH)₂), zinc oxide (ZnO), barium titanate (BaTiO₃), aluminum nitride (AlN), boron nitride (BN), silicon carbide (SiC), beryllium oxide (BeO), potassium nitrate (KNO₃), monoammonium phosphate (NH₄H₂PO₄) or a mixture thereof, but are not limited thereto. Specifically, the inorganic particles may include alumina (Al₂O₃), boehmite (AlOOH), silica (SiO₂) or a mixture thereof.

In an embodiment of the present disclosure, the inorganic particles may have, for example, an average particle size of 250 nm or more. Specifically, the average particle size of the inorganic particles may be from 250 nm to 1,000 *µ*m or from 250 nm to 500 *µ*m.

In the specification, the 'average particle size' may refer to D₅₀ average particle size. The 'D₅₀ average particle size' refers to a particle size at 50% of cumulative volume particle size distribution. The D₅₀ average particle size may be measured using a laser diffraction method, and specifically may be measured by dispersing target particles in a dispersion medium, introducing it into a commercially available laser diffraction particle size measuring instrument, measuring a diffraction pattern difference according to the particle size when the particles pass through a laser beam and calculating the particle size distribution. The commercially available laser diffraction particle size measuring instrument may include, for example, Microtrac S3500, but is not limited thereto.

In an embodiment of the present disclosure, a weight ratio of the inorganic particles and the binder is not limited to a particular range without departing from the objectives of the present disclosure, but may be, for example, from 9:1 to 1:9. Specifically, the weight ratio of the inorganic particles and the binder may be from 7:3 to 9:1, and more specifically 8:2. When the weight ratio of the inorganic particles and the binder lies in the aforementioned range, this may have a beneficial effect on the insulation of the insulating coating portion the adhesion strength of the positive electrode and the adhesion strength of the insulating coating portion, but the present disclosure is not limited thereto.

Hereinafter, the other components of the electrode assembly according to an aspect of the present disclosure will be described in detail.

### Positive electrode

As described above, the positive electrode includes the current collector and the active material layer on at least one surface of the current collector.

In an embodiment of the present disclosure, the positive electrode may include the current collector; the active material layer on at least one surface of the current collector; and the insulating coating portion on the entire outer periphery of the active material layer.

The current collector is not limited to a particular type and may include those which support the active material layer, and have high conductivity without causing a chemical change to the corresponding battery. For example, the current collector may include copper, stainless steel, aluminum, nickel, titanium, palladium, sintered carbon or copper or stainless steel treated with carbon, nickel or silver on the surface, and an aluminum-cadmium alloy.

The current collector may have micro-textured surfaces to enhance the bond strength between the current collector and the positive electrode active material, and may come in various forms, for example, a film, a sheet, a foil, a mesh, a net, a porous body, a foam and a nonwoven.

The active material layer includes the positive electrode active material, and may further include a conductive material, a binder and an additive.

In an embodiment of the present disclosure, the positive electrode active material may include, for example, lithium transition metal oxide; lithium metal iron phosphate; lithium nickel-manganese-cobalt oxide; lithium nickel-manganese-cobalt oxide partially substituted by other transition metal; or two or more of them, but is not limited thereto. Specifically, the positive electrode active material may include, for example, layered compounds such as lithium cobalt oxide (LiCoO₂), lithium nickel oxide (LiNiO₂) or compounds substituted by one or more transition metal; lithium manganese oxide such as chemical formula Li₁₊ₓMn₂₋ₓO₄ (x = 0 ~ 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site type lithium nickel oxide represented by chemical formula LiNi₁₋ₓMₓO₂ (M = Co, Mn, Al, Cu, Fe, Mg, B or Ga, x = 0.01 ~ 0.3); lithium manganese composite oxide represented by chemical formula LiMn₂₋ₓMₓO₂ (M = Co, Ni, Fe, Cr, Zn or Ta, x = 0.01 ~ 0.1) or Li₂Mn₃MO₈ (M = Fe, Co, Ni, Cu or Zn); lithium metal phosphate LiMPO₄ (M = Fe, Co, Ni, or Mn); lithium nickel-manganese-cobalt oxide Li₁₊ₓ(NiₐCo_{b}Mn_{c})₁₋ₓO₂ (x = 0 ~ 0.03, a = 0.3 ~ 0.95, b = 0.01 ~ 0.35, c = 0.01 ~ 0.5, a+b+c=1); lithium nickel-manganese-cobalt oxide Liₐ[Ni_{b}Co_{c}Mn_{d}Alₑ]_{1-f}M1_{f}O₂ partially substituted by aluminum (M1 is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, 0≤f≤0.1); lithium nickel-manganese-cobalt oxide Li₁₊ₓ(NiₐCo_{b}Mn_{c}M_{d})₁₋ₓO₂ partially substituted by other transition metal (x = 0 ~ 0.03, a = 0.3 ~ 0.95, b = 0.01 ~ 0.35, c = 0.01 ~ 0.5, d = 0.001 ~ 0.03, a+b+c+d=1, M is any one selected from the group consisting of Fe, V, Cr, Ti, W, Ta, Mg and Mo), disulfide compounds; Fe₂(MoO₄)₃, but is not limited thereto.

In an embodiment of the present disclosure, the conductive material may be a material that serves as a movement pathway of electrons from the current collector to the positive electrode active material by electrically connecting the electrolyte to the positive electrode active material, and may include, without limitation, any material having conductive properties as the component of the electrode that is physically different from carbon contained in the sulfur-carbon composite.

In an embodiment of the present disclosure, the conductive material may include, for example, carbon black such as Super-P, Denka black, acetylene black, Ketjen black, channel black, furnace black, lamp black, thermal black, carbon black; carbon derivatives such as carbon nanotubes or fullerene; conductive fibers such as carbon fibers or metal fibers; fluorocarbon; metal powder such as aluminum, nickel powder; or conductive polymer such as polyaniline, polythiophene, polyacetylene, polypyrrole, either used alone or in combination.

In an embodiment of the present disclosure, the amount of the conductive material may be from 0 weight% to 10 weight%, for example, from 1 weight% to 10 weight% based on the total weight of the active material layer. When the amount of the conductive material is below the aforementioned range, voltage and capacity may reduce due to poor electron transfer between the positive electrode active material and the current collector, and on the contrary, when the amount of the conductive material is above the aforementioned range, the total energy (the amount of charge) of the battery may reduce due to the smaller ratio of the positive electrode active material, and accordingly, it is preferable to determine the optimal amount within the aforementioned range.

In an embodiment of the present disclosure, the positive electrode active material layer may include the positive electrode active material and the binder polymer, and may not include the conductive material. More positive electrode active materials may be included as much as the conductive material.

In an embodiment of the present disclosure, the positive electrode binder may maintain the positive electrode active material on the positive electrode current collector and interconnect the positive electrode active material particles to increase the bond strength between them, and may include any binder polymer known in the corresponding industry.

In an embodiment of the present disclosure, the binder in the positive electrode active material layer may be the same as or different from the binder of the insulating coating portion, i.e., the first adhesive binder and/or the second adhesive binder, and may be selected independently of them.

In an embodiment of the present disclosure, the binder in the positive electrode active material layer may include, for example, a fluoro resin-based binder including polyvinylidene fluoride (PVdF) or polytetrafluoroethylene (PTFE); a rubber-based binder including styrene butadiene rubber (SBR), acrylonitrile-butadiene rubber, styrene-isoprene rubber; a cellulose-based binder including carboxyl methyl cellulose (CMC), starch, hydroxy propylcellulose, regenerated cellulose; a polyalcohol-based binder; a polyolefinbased binder including polyethylene, polypropylene; a polyimide-based binder; a polyesterbased binder; a polyacryl-based binder including polyacrylic acid (PAA); a silane-based binder; a polyurethane-based binder; or a mixture thereof, and the binder polymer may include a copolymer including repeat units derived from two or more of these binder.

In an embodiment of the present disclosure, the amount of the binder polymer may be from 0.5 wt% to 30 wt% based on the total 100 wt% of the positive electrode active material layer. When the amount of the binder polymer satisfies the aforementioned range, the physical properties of the positive electrode may improve, thereby preventing separation of the active material and the conductive material in the positive electrode, and the ratio of the active material and the conductive material in the positive electrode may be properly controlled to ensure battery capacity.

### Negative electrode

The negative electrode may include the negative electrode current collector and the negative electrode active material layer on one surface or two surfaces of the negative electrode current collector. Alternatively, the negative electrode may be a lithium metal plate.

In an embodiment of the present disclosure, the negative electrode may include the current collector; the active material layer on at least one surface of the current collector; and the insulating coating portion on the entire outer periphery of the active material layer.

The negative electrode current collector is configured to support the negative electrode active material layer as described in the positive electrode current collector.

In addition to the negative electrode active material, the negative electrode active material layer may include a conductive material and a binder. In this instance, the conductive material and the binder follows the above description.

The negative electrode active material may include materials capable of reversible intercalation or deintercalation of lithium (Li⁺), materials that reversibly form lithium containing compounds by reaction with lithium ions, lithium metals or lithium alloys.

The materials capable of reversible intercalation or deintercalation of lithium ions (Li⁺) may include, for example, crystalline carbon, amorphous carbon or a mixture thereof. The materials that reversibly form lithium containing compounds by reaction with lithium ions (Li⁺) may include, for example, zinc oxide, titanium nitrate or silicon. The lithium alloys may include, for example, alloys of lithium (Li) and metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and zinc (Sn).

### Separator

The separator separates or isolates the positive electrode from the negative electrode, and transports lithium ions between the positive electrode and the negative electrode, and may include any type of separator commonly used in the electrochemical device without limitation. For example, the separator may include separators having a film shape.

According to an embodiment of the present disclosure, the separator may include a porous substrate and a porous coating layer on at least one surface of the porous substrate.

Hereinafter, the porous substrate and the porous coating layer will be described by way of illustration.

In an embodiment of the present disclosure, the porous substrate is a porous ionconducting barrier that prevents electrical contact between the negative electrode and the positive electrode and allows ions to pass through and refers to a substrate having pores therein. The pores are connected to each other to allow gases or liquids to pass from one side of the substrate to the other side.

In an embodiment of the present disclosure, the porous substrate may include a porous polymer film including a thermoplastic resin to provide a shut-down function. Here, the shut-down function refers to a function in which when the battery temperature is high, the thermoplastic resin melts to block the pores of the porous substrate and stop ion migration, thereby preventing thermal runaway in the battery.

In an embodiment of the present disclosure, the thermoplastic resin used in the porous substrate may preferably include thermoplastic resin of less than 200°C. Additionally, the thermoplastic resin may include, for example, any type of thermoplastic resin used as the substrate of the separator without limitation. The thermoplastic resin may include, for example, polyolefin, polyethyleneterephthalate, polybutyleneterephthalate, polyacetal, polyamide, polycarbonate, polyimide, polyetheretherketone, polyethersulfone, polyphenyleneoxide, polyphenylene sulfide, polyethylenenaphthalene or a mixture thereof, but is not limited thereto.

In an embodiment of the present disclosure, the porous substrate may be a polyolefin substrate.

In an embodiment of the present disclosure, the porous coating layer may include inorganic particles and further include a binder resin, and all or at least part of the surface of the inorganic particles may be coated by the binder resin. In this instance, the inorganic particles are held together surface-to-surface and/or point-to-point by the medium of the binder resin. For example, the inorganic particles and the binder resin may be included in the porous coating layer at a weight ratio of from 95:5 to 50:50. The porous coating layer has a plurality of micropores which are connected to each other, and has a structural feature of a porous layer that allows gases or liquids to pass from one side to the other side.

In an embodiment of the present disclosure, the porous coating layer may have a pore structure formed from voids (interstitial volume) between the inorganic particles. The particle size or porosity (the ratio of pore volume) may be adjusted according to the particle size and particle size distribution. Through this structure, it is possible to increase the resistance to metallic impurities present in the electrode and suppress shrinkage of the porous polyolefin substrate, thereby enhancing safety of the electrochemical device.

In an embodiment of the present disclosure, the porous coating layer may include a plurality of nodes including the inorganic particles and the binder polymer that covers at least part of the surface of the inorganic particles; and at least one filament formed in the shape of thread from the binder polymer of the nodes, wherein the filament has a node connection part that extends from the node and connects the node to another node, and the node connection part has a 3-dimensional network structure formed by interconnection of the filaments originating from the binder polymer.

In an embodiment of the present disclosure, the porous coating layer may be formed through a Safety Reinforced Separator (SRS) manufacturing method, a Ceramic Coated Separator (CCS) manufacturing method, or any other known manufacturing method, but is not limited thereto.

In an embodiment of the present disclosure, the inorganic particles are not limited to a particular type and may include any type of inorganic particles that are electrochemically stable. That is, the inorganic particles that may be used in the present disclosure are not limited to a particular type and may include any type of inorganic particles in which oxidation and/or reduction reaction does not occur in the operating voltage range (*e.g.,* 0 to 5V vs Li/Li⁺) of the electrochemical device applied. Non-limiting examples of the inorganic particles may include at least one of BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC or TiO₂.

In an embodiment of the present disclosure, when the porous coating layer includes the binder resin, the binder resin may include, for example, polyvinylidene fluoride-based resin (PVdF-based resin). In an embodiment of the present disclosure, the PVdF-based resin may include at least one of vinylidene fluoride homopolymer (i.e., polyvinylidene fluoride), copolymers of vinylidene fluoride with comonomers and a mixture thereof. In an embodiment of the present disclosure, the monomer may include, for example, fluorinated monomers and/or chlorine-based monomers. Non-limiting examples of the fluorinated monomers may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether(PEVE) and perfluoro(propylvinyl)ether (PPVE); perfluoro(1,3-dioxole); and perfluoro(2,2-dimethyl-1,3-dioxole) (PDD).

In an embodiment of the present disclosure, the first porous coating layer and the second porous coating layer may have the same composition, but they may be formed with different composition if necessary, and the present disclosure is not limited thereto.

In an embodiment of the present disclosure, the binder in the porous coating layer may be the same as or different from the binder of the insulating coating portion, i.e., the first adhesive binder and/or the second adhesive binder, and may be selected independently of them.

According to another aspect of the present disclosure, there may be provided an electrochemical device including the above-described electrode assembly and a case accommodating the electrode assembly.

In an embodiment of the present disclosure, the case may include any commonly used battery case, and is not limited to a particular shape according to the use of the battery. For example, the case may have a cylindrical, prismatic, pouch or coin shape using a can.

When the electrode assembly is completed as described above, the electrode assembly may be received in the case and the case may be sealed according to the commonly used method to manufacture the electrochemical device, and in this instance, the electrochemical device may be, for example, a lithium secondary battery.

Meanwhile, to improve the adhesion strength between the separator and the electrode or prevent short circuits between the electrodes, the separator may have the adhesive insulating coating portion thereon. In this case, when the adhesive insulating coating portion is present on the separator, the coating solution infiltrates into the pores of the separator and block the pores of the separator, resulting in poor air permeability of the separator. Accordingly, according to an aspect of the present disclosure, as described above, it is preferable to laminate the separator after forming the insulating coating portion on the active material layer of the electrode in contact with the separator.

According to an embodiment of the present disclosure, when the coating solution is applied to the separator, the coating solution may infiltrate into the pores on the surface of the separator, resulting in poor air permeability of the separator and air permeation time of more than 200 sec/100 cc, so the separator cannot be used as a separator for an electrochemical device. Here, the air permeation time may be a measured value using Gurley Densometer in accordance with ASTM D726-94 standard. Specifically, the air permeability may be measured as air permeation time, i.e., the time (sec) required for 100 cc of air to pass through 1 inch² of the separator under the pressure of 12.2 in H₂O.

In the electrode assembly manufactured according to an embodiment of the present disclosure, the separator may exhibit the air permeation time of 200 sec/100 cc or less, and specifically 150 sec/100 cc or less, 100 sec/100 cc or less, but the present disclosure is not limited thereto.

Accordingly, according to another aspect of the present disclosure, there is provided a method for manufacturing the electrode assembly.

The method for manufacturing the electrode assembly according to another aspect of the present disclosure includes the steps of:
preparing the electrode including the current collector, and the active material layer on at least one surface of the current collector,
forming the insulating coating portion including the inorganic particles and the binder on the entire outer periphery of one surface of the active material layer, and
bringing the separator into contact with the surface having the insulating coating portion and rolling.

As described above, the electrode having the insulating coating portion may be at least one of a positive electrode and a negative electrode.

Additionally, the electrode assembly manufactured as described above may exhibit the wet adhesion strength between the electrode having the insulating coating portion and the separator of from 1 gf/20 mm to 20 gf/20 mm.

Hereinafter, the present disclosure will be described in more detail through examples, but the following examples are provided for illustration purposes, and the scope of the present disclosure is not limited thereto.

### [Preparation of insulating coating composition]

### Example 1

80 parts by weight of Al2O3 (D₅₀ 500nm) as inorganic particles, and 20 parts by weight of binder were added to water (H₂O) and stirred to prepare an insulating coating composition.

The binder was a mixture of a first adhesive binder (acrylic, D₅₀ 400 nm) having Tg of 50°C and a second adhesive binder (acrylic, D₅₀ 200 nm) having Tg of -20°C at a weight ratio of 8:2.

### Example 2

An insulating coating composition was prepared by the same method as Example 1, except that the first adhesive binder was changed to acrylic binder having Tg of 70°C, and the second adhesive binder was changed to acrylic binder having Tg of -40°C.

### Comparative Example 1

An insulating coating composition was prepared by the same method as Example 1, except that the first adhesive binder having Tg of 50°C was used alone as the binder.

### Comparative Example 2

An insulating coating composition was prepared by the same method as Example 1, except that the second adhesive binder having Tg of -20°C was used alone as the binder.

### Comparative Example 3

An insulating coating composition was prepared by the same method as Example 1, except that the first adhesive binder was changed to acrylic binder having Tg of 40°C, and the second adhesive binder was changed to acrylic binder having Tg of 30°C.

### [Preparation Example 1. Preparation of electrode assembly]

An electrode assembly was manufactured using the as-prepared insulating coating composition as follows.

First, a positive electrode active material (LiNi_{0.8}Mn_{0.1}Co_{0.1}O₂), a conductive material (carbon black), a dispersant and a binder resin (PVDF-HFP and PVDF mixture) were mixed with water at a weight ratio of 97.5:0.7:0.14:1.66 to prepare a slurry for a positive electrode active material layer such that the concentration of the remaining components except water was 50 wt%. Subsequently, the slurry was applied to the surface of an aluminum foil (thickness 10 *µ*m) and dried to form a positive electrode active material layer (thickness 120 *µ*m). Each insulating coating composition was applied to the outer periphery of one surface of the positive electrode active material layer and dried to manufacture a positive electrode having an insulating coating portion (thickness 1 *µ*m) on the entire outer periphery of the active material layer (the total area of the insulating coating portion was 17 area% based on the total area of one surface of the positive electrode active material layer).

Graphite (natural graphite and artificial graphite blend), a conductive material (carbon black), a dispersant and a binder resin (PVDF-HFP and PVDF mixture) were mixed with water at a weight ratio of 97.5:0.7:0.14:1.66 to prepare a slurry for a negative electrode active material layer such that the concentration of the remaining components except water was 50 wt%. Subsequently, the slurry was applied to the surface of a copper foil (thickness 10 *µ*m) and dried to manufacture a negative electrode having a negative electrode active material layer (thickness 120 *µ*m).

The positive electrode and the negative electrode were placed with a polyethylene separator having a thickness of 16 *µ*m and a porosity of 46 vol% interposed between them to prepare an electrode assembly.

### [Adhesion strength evaluation]

For each of the as-prepared electrode assemblies, the wet adhesion strength, the dry adhesion strength and the peel strength were evaluated by the following method, and the results are shown in TABLE 1 below. TABLE 1 summarizes the glass transition temperature characteristics of the binder used to form the insulating coating portion.

### Wet adhesion strength

Each of the positive electrode and the separator prepared as described above was tailored into a size of 25 mm X 60 mm, the pressure of 6.5 MPa was applied using a heat press at 60°C for 1 second, the positive electrode-separator assembly was placed in a pouchtype case, and 1g of an electrolyte solution was injected into the case, followed by aging and degassing for a day, wherein the electrolyte solution contains 1M LiPF₆ dissolved in 1,3-dioxolane:dimethoxymethane (DOL:DME 1:1 v/v) mixed solvent.

Subsequently, the positive electrode-separator assembly was removed from the case and mounted on UTM machine (LLOYD Instrument LF Plus), then a force was applied 90° at the measurement speed of 300 mm/min to measure a force required for separating the adhered surface.

### Dry adhesion strength

Each of the positive electrode and the separator prepared as described above was tailored into a size of 25 mm X 60 mm, the pressure of 6.5 MPa was applied using a heat press at 60°C for 1 second, and mounted on UTM machine (LLOYD Instrument LF Plus), then a force was applied 180° at the measurement speed of 300 mm/min to measure a force required for separating the adhered surface.

### Peel strength

The as-prepared positive electrode was tailored into a size of 15 mm X 100 mm. A double-sided adhesive tape was attached to a glass plate, and the surface of the insulating coating portion and the active material layer of the prepared positive electrode was adhered to the adhesive tape. Subsequently, the end of the adhered insulating coating portion was mounted on UTM machine (LLOYD Instrument LF Plus), and a force was applied 180° at the measurement speed of 300 mm/min to measure a force required for peeling the insulating coating portion from the active material layer.

**[TABLE 1]**

| | Binder composition | Wet adhesion strength (gf/20mm) | Dry adhesion strength (gf/25mm) | Peel strength (gf/15 mm) |
|---|---|---|---|---|
| Comparative Example 1 | Tg 50°C Only one type of binder | 0 | 0 | 0 |
| Comparative Example 2 | Tg -20°C Only one type of binder | 0 | 0 | 30 |
| Comparative Example 3 | Tg 40°C/Tg 30°C | 0 | 3 | 5 |
| | Mixture of two types of binders | | | |
| Example 1 | Tg 50°C/ Tg - 20°C | 10 | 20 | 25 |
| | Mixture of two types of binders | | | |
| Example 2 | Tg 70°C/ Tg - 40°C | 8 | 5 | 15 |
| | Mixture of two types of binders | | | |

As shown in the results of TABLE 1, it was confirmed that when the insulating coating portion was formed on the entire outer periphery of the positive electrode active material layer, the use of the first adhesive binder having Tg of 50°C or more and the second adhesive binder having Tg of 20°C or less may exhibit the wet adhesion strength in a range between 1 gf/20 mm and 20 gf/20 mm. In particular, it was confirmed that Example 1 using two types of adhesive binders having a difference in glass transition temperature of 100°C or less was better than Comparative Examples 1 to 3 in terms of not only the wet adhesion strength but also the dry adhesion strength and the peel strength.

In contrast, it was confirmed that in the case of Comparative Example 3 using two types of binders having different glass transition temperatures as the binder of the insulating coating portion (glass transition temperatures of 40°C and 30°C), the bond strength (peel strength) of the insulating coating portion was low and both the wet adhesion strength and the dry adhesion strength were low. Additionally, it was confirmed that in the case of Comparative Example 1 using only one type of binder having Tg of 50°C, all the peel strength, the wet adhesion strength and the dry adhesion strength of the insulating coating portion were low, and in the case of Comparative Example 2 using only one type of binder having Tg of -20°C, the bond strength of the insulating coating portion was strong but the wet adhesion strength and the dry adhesion strength were low. Through this, it was inferred that in the case of Comparative Example 2, the binder soaked in between the inorganic particles increased the bond strength of the insulating coating portion but the adhesion strength on the surface of the insulating coating portion was low.

### [Comparative Preparation Example 1. Preparation of electrode assembly]

The as-prepared insulating coating composition of Example 1 was used, and the positive electrode, the negative electrode and the separator manufactured in Preparation Example 1 were equally prepared.

The insulating coating portion was not formed on the positive electrode, the insulating coating composition of Example 1 was applied to one surface of the separator (thickness 16 *µ*m, porosity 46 vol%) in contact with the positive electrode and dried to prepare the separator having the insulating coating portion on one surface.

The positive electrode/the separator/the negative electrode were laminated such that the insulating coating portion of the separator and the positive electrode contact each other to manufacture an electrode assembly.

It was confirmed that the electrode assembly prepared according to Comparative Preparation Example 1 cannot be used as an electrochemical device due to the remarkable reduction in the pores of the separator. Specifically, it was confirmed that as a result of evaluating the air permeability of the separator having the insulating coating portion as follows, the air permeation time of the separator exceeded 200 s/100 cc.

### Air permeability (air permeation time) measurement

Air permeability was measured using Gurley Densometer in accordance with ASTM D726-94 standard. Specifically, the air permeability was measured as air permeation time, i.e., the time (sec) required for 100 cc or air to pass through 1 inch² of the separator under the pressure of 12.2 in H₂O.

While the present disclosure has been hereinabove described with reference to the embodiments and drawings, a variety of modifications and changes may be made by those skilled in the art based on the foregoing description without departing from the scope of the present disclosure.

### [List of Reference Numerals]

1: Electrode tab portion
10: Current collector
11: Electrode active material layer
20: Insulating coating portion
30: Separator

## Claims

1. An electrode assembly comprising:
a positive electrode, a negative electrode and a separator between the positive electrode and the negative electrode,
wherein at least one of the positive electrode or the negative electrode includes a current collector; an active material layer on at least one surface of the current collector; and an insulating coating portion on an entire outer periphery of one surface of the active material layer, and
wherein a wet adhesion strength between the positive electrode or the negative electrode having the insulating coating portion and the separator is from 1 gf/20 mm to 20 gf/20 mm.

2. The electrode assembly according to claim 1, wherein at least one of the positive electrode or the negative electrode includes the active material layer on each of two surfaces of the current collector; and the insulating coating portion on the entire outer periphery of one surface of each of the active material layers.

3. The electrode assembly according to claim 1, wherein the insulating coating portion includes inorganic particles and a binder, and
wherein the binder includes two types of adhesive binders having a difference in glass transition temperature (Tg) of 100°C or less.

4. The electrode assembly according to claim 1, wherein the insulating coating portion includes inorganic particles and a binder, and
wherein the binder includes:
a first adhesive binder having a glass transition temperature (Tg) of 50°C or more, and
a second adhesive binder having a glass transition temperature (Tg) of 20°C or less.

5. An insulating coating composition comprising:
inorganic particles and a binder,
wherein the binder includes two types of adhesive binders having a difference in glass transition temperature (Tg) of 100°C or less.

6. An insulating coating composition comprising:
inorganic particles and a binder,
wherein the binder includes:
a first adhesive binder having a glass transition temperature (Tg) of 50°C or more, and
a second adhesive binder having a glass transition temperature (Tg) of 20°C or less.

7. The insulating coating composition according to claim 6, wherein the first adhesive binder includes an aqueous particle binder.

8. The insulating coating composition according to claim 7, wherein the first adhesive binder includes the aqueous particle binder having a particle size of 250 nm or more.

9. The insulating coating composition according to claim 6, wherein the second adhesive binder includes an aqueous particle binder, a solution binder or a mixture thereof.

10. The insulating coating composition according to claim 9, wherein the second adhesive binder includes the aqueous particle binder having a particle size of 250 nm or less.

11. The insulating coating composition according to claim 6, wherein a weight ratio between the first adhesive binder and the second adhesive binder is from 1:9 to 9:1.

12. The insulating coating composition according to claim 5 or 6, wherein a weight ratio between the inorganic particles and the binder is from 7:3 to 9:1.

13. An electrochemical device comprising:
the electrode assembly according to any one of claims 1 to 4; and
a case accommodating the electrode assembly.

14. A method for manufacturing an electrode assembly, comprising:
preparing an electrode including a current collector, and an active material layer on at least one surface of the current collector;
forming an insulating coating portion including inorganic particles and a binder on an entire outer periphery of one surface of the active material layer; and
bringing a separator into contact with the surface having the insulating coating portion and rolling,
wherein the electrode is at least one of a positive electrode and a negative electrode, and
wherein a wet adhesion strength between the electrode having the insulating coating portion and the separator is from 1 gf/20 mm to 20 gf/20 mm.
